Europäisches Patentamt

European Patent Office

Office européen des brevets

(19)

(11) **EP 1 202 085 B1**

(12) **FASCICULE DE BREVET EUROPEEN**

(45) Date de publication et mention
de la délivrance du brevet:
**21.12.2005 Bulletin 2005/51**

(51) Int Cl.⁷: **G02B 6/12**

(21) Numéro de dépôt: **01402721.3**

(22) Date de dépôt: **19.10.2001**

(54) **Procédé de réalisation d'un guide d'onde, notamment optique, et dispositif de couplage optique comportant un tel guide**

Verfahren zum Herstellen eines optischen Wellenleiters und Kopplungsvorrichtung mit einem solchen Leiter

Optical waveguide fabrication process und optical coupling device using such a guide

(84) Etats contractants désignés:
**BE DE FR GB IT NL**

(30) Priorité: **27.10.2000 FR 0013848**

(43) Date de publication de la demande:
**02.05.2002 Bulletin 2002/18**

(73) Titulaire: **Thales**
**75008 Paris (FR)**

(72) Inventeurs:
- **Bellini, Robert, Thales Intellectual Property**
  **94117 Arcueil Cedex (FR)**
- **Chazelas, Jean, Thales Intellectual Property**
  **94117 Arcueil Cedex (FR)**
- **Decoster, Didier, Thales Intellectual Property**
  **94117 Arcueil Cedex (FR)**
- **Vilcot, Jean-Pierre, Thales Intellectual Property**
  **94117 Arcueil Cedex (FR)**
- **Harari, Joseph, Thales Intellectual Property**
  **94117 Arcueil Cedex (FR)**

(74) Mandataire: **Lucas, Laurent Jacques**
**Marks & Clerk France**
**31-33 Avenue Aristide Briand**
**94117 Arcueil Cedex (FR)**

(56) Documents cités:
EP-A- 0 657 753          WO-A-98/00894
US-A- 4 520 485          US-A- 4 946 239
US-A- 5 402 511          US-A- 5 473 710
US-A- 5 703 895          US-A- 6 118 915

- VAWTER G A ET AL: "TAPERED RIB ADIABATIC FOLLOWING FIBER COUPLERS IN ETCHED GAAS MATERIALS FOR MONOLITHIC SPOT-SIZE TRANSFORMATION" IEEE JOURNAL OF SELECTED TOPICS IN QUANTUM ELECTRONICS, IEEE SERVICE CENTER, US, vol. 3, no. 6, 1 décembre 1997 (1997-12-01), pages 1361-1370, XP000741455 ISSN: 1077-260X

## Description

La présente invention concerne un procédé de réalisation d'un guide d'onde optique. Elle concerne également un dispositif de couplage optique comportant un tel guide. Elle s'applique notamment pour le couplage entre des composants, par exemple en polymère ou en semi-conducteur, et des fibres optiques. Elle peut aussi s'appliquer en particulier pour des interconnexions entre composants ou dispositifs optiques sur un même circuit, tels que par exemple des circuits du type PLC, connus selon l'expression anglo-saxonne « Planar Waveguide Circuit ». L'invention peut ainsi s'appliquer notamment pour la distribution de signaux hyperfréquence sur porteuse optique, par exemple dans des systèmes radar.

Le domaine des télécommunications requiert des transmissions numériques de débit croissant, largement au-delà de quelques gigabits par seconde. Ce même domaine des télécommunications nécessite aussi des dispositifs de routage optique permettant d'adresser les signaux émis vers les abonnés auxquels ils sont destinés. Ce domaine s'étend à celui des transmissions de signaux hyperfréquence particulièrement important dans les systèmes radar notamment.

Les composants nécessaires à la réalisation de ces fonctions sont essentiellement de deux types principaux :

- d'une part les composants optoélectroniques, tels que par exemple les lasers, les diodes laser, les modulateurs électro-optiques, les photodiodes ou les amplificateurs optiques ;
- d'autre part les fibres optiques.

Il est par ailleurs connu que les dimensions des faisceaux optiques propres des composants optoélectroniques diffèrent en fonction de leur nature. En particulier, les guides optiques des composants optoélectroniques semi-conducteurs présentent des sections très inférieures aux sections des fibres optiques monomodes ou multimodes. Le rapport peut être de 1 à 10. Typiquement, la section du guide optique d'un composant optoélectronique présente une dimension principale de l'ordre du micromètre alors que le diamètre du coeur d'une fibre optique est de l'ordre d'une dizaine de micromètres. De plus, les géométries des guides optiques, essentiellement rectangulaires, nécessitent des adaptations géométriques en trois dimensions, pour être compatibles avec les guides cylindriques des liaisons optiques monomodes ou multimodes, tels que les fibres optiques notamment. Un problème à résoudre est donc d'assurer une transition optique entre ces composants ou dispositifs optiques actifs ou passifs, présentant des pertes d'insertion minimales. La difficulté est notamment d'assurer le passage d'un signal optique d'un guide de grande section vers un guide de petite section.

De nombreuses solutions ont déjà été proposées. Elles font appel à des convertisseurs de modes ou à des coupleurs connus dans la littérature anglo-saxonne sous le nom de « taper » qui jouent sur la dimension des guides. Un taper est une sorte de transition optique ayant la forme d'un entonnoir à deux dimensions. Parmi ces solutions, il existe des structures présentant plusieurs niveaux de « tapers » horizontaux dont la géométrie est calculée de façon à passer adiabatiquement d'un mode large à un mode étroit dans le but notamment de réaliser un entonnoir à trois dimensions, mais de façon discontinue. Une telle solution est en particulier décrite dans l'article de N. Shaw, P.J. Williams et J. Buus, « Optoelectronic integrated circuit (OEIC) waveguide coupler for spot size expansion and improved fiber coupling efficiency », Electronics Letters 31, n°14, p1143, 1995.

D'autres solutions sont connues pour les matériaux semi-conducteurs III-V. Ces solutions utilisent des techniques de reprise d'épitaxie et de gravure inhomogène permettant ainsi de façonner le coeur du guide et de lui donner une taille variable comme le décrit notamment l'article de G. Müller, B. Stegmüller, H. Westermeier et G. Wenger, « Tapered InP/InGaAsP waveguide structure for efficient fiber-chip coupling », Electronics Letters 27, n°20, p 1836, 1991.

Dans le cas des composants optoélectroniques en matériaux vitreux, les guides d'ondes sont formés par dopage aux ions $K^+$, $Na^+$ ou $Ag^+$ par exemple. Le contrôle de leur diffusion permet de réaliser également des « tapers » comme le montre notamment l'article de M. Mashayekhi, T. Touam, W.J. Wang, E. Borolo et S. Iraj Najafi, « Semiconductor device to optical fiber coupling using low-loss glass taper waveguide », Optical Engineering 36, n°12, p 3476, 1997.

Enfin, des études ont utilisé des polymères pour des interconnexions simples, comme le décrit notamment l'article de P.K. Tien, R.J. Martin et G. Smolinsky, « Formation of light-guiding interconnections in an integrated optical circuit by composite tapered-film coupling », Applied Optics 12, n°8, p 1909, 1973, ou pour des guides dont l'indice varie le long de l'axe de propagation, comme le décrit l'article de R. Inaba, M. Kato, M. Sagawa et H. Akahoshi, « Two-dimensional mode size transformation by Δn-controlled polymer waveguides », Journal of Lightwave Technology 16, n°4, p 620, 1998.

Cependant, toutes ces techniques présentent au moins un inconvénient. Elles ne permettent pas un contrôle direct de la hauteur du faisceau optique couplant deux composants ou nécessitent, pour l'obtenir, des techniques coûteuses, peu reproductibles, difficiles à mettre en oeuvre et peu précises.

Un but de l'invention est notamment de pallier l'inconvénient précité. A cet effet l'invention a pour objet un procédé de réalisation d'un guide d'onde optique selon la revendication 1. La forme du guide est définie par par la forme de la gravure.

Avantageusement, pour que le guide permette de faire transiter convenablement le flux lumineux d'une section vers une section plus petite, la largeur de la gravure varie pour former un entonnoir à trois dimensions. La gravure est remplie par un matériau guidant l'onde optique. Pour assurer un guidage des ondes optiques quels que soient le substrat et le milieu de propagation, une couche d'isolant optique est par exemple déposée sur la surface intérieure de la gravure. Cette couche peut être métallique.

L'invention a également pour objet un dispositif de couplage comportant un guide réalisé selon le procédé précité.

L'invention a pour principaux avantages qu'elle est adaptée à de nombreux domaines d'application, qu'elle permet d'obtenir des dispositifs de couplages très bien reproductives, qu'elle est simple à mettre en oeuvre et qu'elle est économique.

D'autres caractéristiques et avantages de l'invention apparaîtront à l'aide de la description qui suit faite en regard de dessins annexés qui représentent :

- la figure 1, une représentation schématique d'un couplage optique entre une fibre optique et un composant optoélectronique ;
- la figure 2, un principe de réalisation d'un guide selon l'invention par une gravure préférentielle dans un matériau cristallin ;
- les figures 3a, 3b et 3c, un exemple de gravure permettant d'obtenir un guide en forme d'entonnoir ;
- la figure 4, une étape possible du procédé selon l'invention comportant une phase de remplissage de la gravure par un matériau d'indice de réfraction adéquate ;
- les figures 5 et 6, des exemples de réalisation d'un dispositif de couplage optique entre deux composants comportant un guide selon l'invention ;
- les figures 7a et 7b, un exemple de réalisation d'un dispositif de couplage optique comportant un guide selon l'invention effectuant un guidage par arête du flux lumineux entre les deux composants.

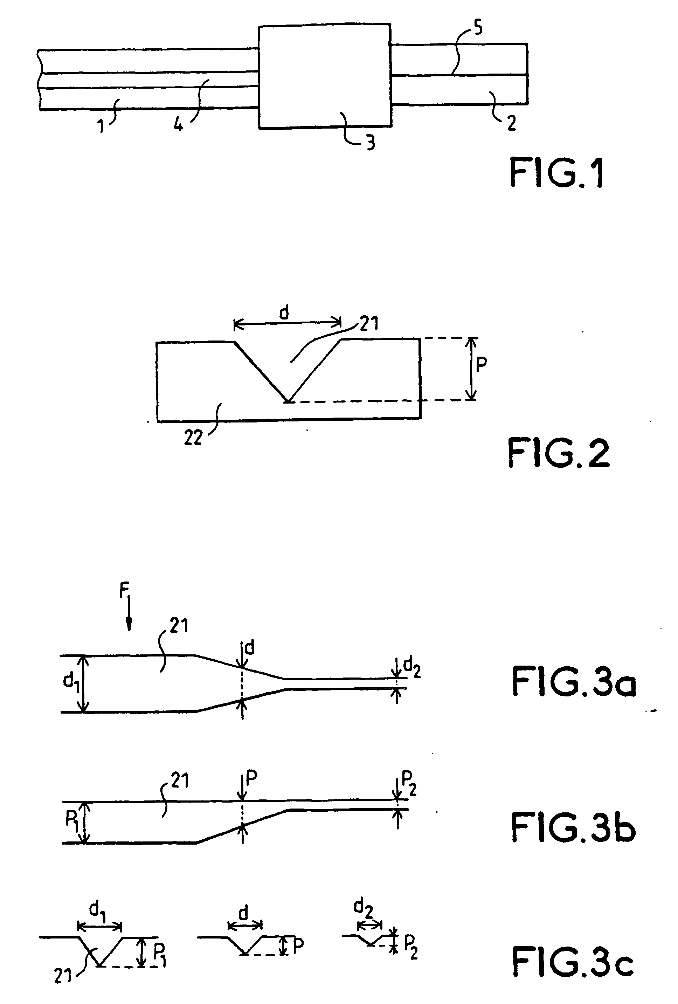

La figure 1 présente de façon schématique un couplage optique entre deux composants 1, 2 dont l'un est par exemple une fibre optique 1 et l'autre est par exemple un composant optoélectronique 2. Ce dernier comporte un guide optique 5 réalisé sur semi-conducteur et ayant une dimension principale d'environ un micromètre. Le coeur 4 de la fibre a un diamètre de l'ordre de 10 micromètres.

La fibre optique 1 véhicule un signal optique qui est par exemple modulé par un signal hyperfréquence. Le composant optoélectronique 2 assure alors la conversion entre le signal optique et le signal hyperfréquence. Quand il reçoit un signal optique, il restitue donc un signal hyperfréquence traité par la suite par des circuits classiques. Dans l'autre sens, lorsqu'il reçoit un signal hyperfréquence, il émet dans la fibre optique une onde porteuse modulée. Des signaux hyperfréquence peuvent ainsi être transmis de manière optique entre deux éléments d'un système hyperfréquence, par exemple un système radar au moyen de fibres optiques. Le couplage entre la fibre optique 1 et le composant optoélectronique 2 est assuré par des moyens de couplage optique 3. Ces derniers doivent notamment permettre le transit d'un faisceau optique sortant d'un des deux composants, par exemple la fibre optique 1, vers l'entrée de l'autre composant, par exemple le composant optoélectronique 2. La section de sortie de la fibre optique 1, circulaire, n'est pas adaptée à la section du guide optique en entrée du composant optoélectronique, nettement inférieure et de surcroît pouvant être rectangulaire. Plus particulièrement, la section du coeur 4 de la fibre 1 est très supérieure à la section du guide optique 5 du composant 2.

Les moyens de couplage 3 doivent guider le faisceau optique sortant de la fibre 1 vers l'entrée du composant 2 avec le minimum de pertes. Or, les différences de dimension des deux sections à coupler rendent cet objectif difficile à atteindre. En particulier, il est nécessaire de contrôler au mieux la hauteur du faisceau optique transitant dans les moyens de couplage, pour éviter notamment qu'une partie du faisceau se disperse en dehors du composant optoélectronique 2 destiné à l'accueillir.

La figure 2 illustre un principe de réalisation possible d'un guide d'onde optique selon l'invention. Un tel guide est par exemple utilisé dans un dispositif de couplage optique entre deux composants. Ce guide d'onde optique réalisé par une gravure préférentielle 21 dans un substrat 22 ayant une structure cristalline. La gravure 21 sert en fait de moule à un dispositif de couplage optique selon l'invention. En d'autres termes, elle définit la forme du guide d'onde optique. Cette gravure est par exemple remplie d'un polymère, ou d'un autre matériau d'indice de réfraction supérieur à l'indice des matériaux ambiants, notamment l'air et le substrat 22. De la sorte, la lumière qui transite par ce matériau de remplissage reste à l'intérieur, et est donc guidée par ce dernier. Ce matériau de remplissage est le milieu de propagation de l'onde optique. Il est possible de remplir la gravure par plusieurs matériaux différents.

En raison de la structure régulière du matériau cristallin, il existe un ou plusieurs axes privilégiés de gravures qui répondent à une propriété particulière du matériau. La gravure est préférentielle dans ce sens qu'elle est dirigée selon l'un de ses axes privilégiés. Cette propriété fait que la profondeur de gravure est fonction de la largeur de la gravure. A titre d'exemple pour un substrat 22 en silicium, la profondeur p est égale à :

$$\frac{\sqrt{2}}{2} d$$

où d est la largeur de gravure.

Le substrat 22 peut donc être un semi-conducteur cristallin tel que par exemple du silicium, de l'arséniure de gallium, du phosphure d'indium ou tout autre matériau cristallin. Pour un silicium, la gravure a une forme de V. Dans le cas d'autres cristallins, la forme peut être différente. Elle peut par exemple être en U. Néanmoins, quelle que soit cette forme, la profondeur de la gravure p dépend de sa largeur d. La gravure peut être obtenue par des moyens chimiques. En choisissant convenablement les solutions chimiques, la vitesse de gravure varie selon les orientations cristallographiques des plans attaqués. Par exemple, pour le silicium dans la potasse à 80°C, le rapport de vitesse de gravure entre les plans 100 et 111 est d'environ 400. La géométrie des rainures est alors imposée.

Pour coupler par exemple une fibre optique 1 à un composant optoélectronique 2, un dispositif de couplage optique selon l'invention comporte un guide d'onde optique présente une forme d'entonnoir à trois dimensions. Avantageusement, cette forme d'entonnoir est obtenue en jouant sur la largeur de la gravure 21. En diminuant notamment cette largeur, on diminue de même la profondeur, obtenant ainsi une forme d'entonnoir, plus particulièrement une cavité ouverte qui va en se rétrécissant selon les trois dimensions.

Les figure 3a, 3b et 3c illustre un exemple de gravure permettant d'obtenir un entonnoir. La figure 3a présente la largeur de la gravure 21 et la figure 3b présente sa profondeur selon un profil longitudinal, vu selon F. La figure 3c illustre la profondeur selon un profil transversal, selon trois coupes successives. A titre d'exemple, la gravure présente une forme en V. Dans un premier secteur, la largeur de la gravure reste constante égale à une première valeur $d_1$. Dans un deuxième secteur, la largeur décroît de la valeur $d_1$ jusqu'à une deuxième valeur $d_2$. Enfin, dans un troisième secteur, la largeur reste constante et égale à cette deuxième valeur $d_2$. Parallèlement, la profondeur reste constante et égale à une première valeur $p_1$ dans le premier secteur, puis décroît dans le deuxième secteur de cette valeur $p_1$ à une deuxième valeur $p_2$. Une forme d'entonnoir est ainsi obtenue. La maîtrise de la hauteur du guide d'onde, qui est correspond en fait à la profondeur de la gravure, est ainsi parfaitement maîtrisée par le contrôle de la largeur de cette gravure. Les caractéristiques de guides obtenus par l'invention répondent par ailleurs à des contraintes de reproductibilité. En particulier, la maîtrise des dimensions permet une bonne reproductibilité. D'autres avantages sont notamment la facilité de mise en oeuvre et l'économie, dues en particulier à la simplicité de réalisation des gravures.

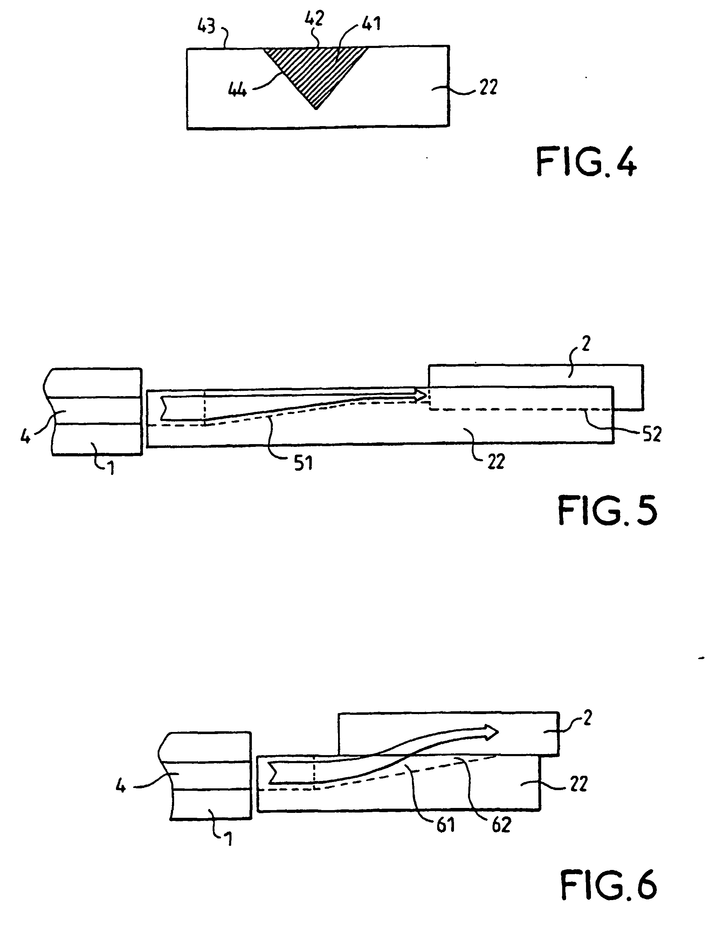

Pour obtenir effectivement un milieu de propagation qui guide les ondes optiques, la gravure 21 est par exemple remplie par un matériau 41 d'indice de réfraction différent du substrat 22 comme l'illustre la figure 4. Le matériau guidant 41 est par exemple un polymère ou une silice. Deux modes de réalisation sont possibles une fois que la gravure 21 est rempli par un tel matériau 41. Dans un premier mode de réalisation, le matériau guidant 41 demeure dans la gravure 21. Dans un deuxième mode de réalisation, le matériau guidant est démoulé. Pour obtenir un guidage satisfaisant, le remplissage doit être de préférence propre. C'est-à-dire qu'il n'y a notamment pas de débordement de matériau, la surface 42 du matériau 41 étant plane et au même niveau que la surface 43 du substrat 22. Un tel remplissage propre peut être obtenu aisément avec le matériau encore à l'état visqueux, avant durcissement.

Comme il a été indiqué précédemment, le matériau guidant 41 peut être un polymère ou une silice. Plus généralement, ce peut être un matériau qui est transparent aux ondes optiques et d'indice de réfraction supérieur à l'indice du milieu ambiant dans lequel il se situe. Afin d'assurer un guidage des ondes optiques quels que soient le substrat 22 et le milieu de propagation 41, une couche métallique 44 est par exemple déposée sur la surface intérieure de la rainure ou gravure 21. La couche métallique 44 peut être remplacée par toute couche qui réfléchit suffisamment la lumière. Une bonne isolation optique peut ainsi être obtenue par exemple au moyen d'une couche d'oxyde de silicium ou d'une couche de nitrure de silicium. En particulier, l'oxyde de silicium constitue un bon matériau de confinement. Il est en effet intéressant car sa croissance par oxydation est une opération classique de la microélectronique. Dans ce cas, le substrat étant en silicium par exemple, on oxyde la surface intérieure de la gravure et il se forme naturellement une couche d'oxyde de silicium. La couche 44 peut évidemment être déposée par tout autre moyen, notamment sous forme de film mince. En cas de démoulage, cette couche peut être démoulée avec le matériau central 41. Dans un cas particulier de réalisation, il est alors possible de recouvrir l'ouverture de la rainure 21 par une couche métallique, la lumière pouvant alors être guidée dans le vide, entre les couches métalliques, sans recours à un matériau guidant.

La figure 5 illustre, par une vue en coupe longitudinale, un mode de réalisation possible d'un dispositif de couplage selon l'invention. Celui-ci assure le couplage entre une fibre optique 1 et un composant optoélectronique 2. Le dispositif de couplage comporte un guide d'onde optique 51 ayant la forme d'un entonnoir. Ce guide est réalisé par gravure préférentielle sur un substrat cristallin 22. Un matériau de remplissage de la gravure, d'indice de réfraction adéquate, forme le guide 51. Eventuellement, l'intérieur de la gravure est recouvert d'une couche métallique. Le coeur 4 de la fibre est placé face à la grande section du guide 51. Comme illustré par les figures 3a à 3c, la section du guide décroît jusqu'à une section finale. Cette dernière est placée en regard du composant optoélectronique 2, plus particulièrement du guide d'onde optique interne à ce composant 2. Pour faciliter le couplage, le substrat 22 comporte une plage d'accueil 52 adaptée au composant 2. Cette plage est notamment creusée dans le substrat de façon à ce que l'entrée du guide du composant soit positionnée aussi parfaitement que possible en face de la sortie du guide 51 de couplage. Avantageusement, le substrat cristallin et le composant optoélectronique peuvent être réalisés à partir d'un même cristallin, par exemple à partir d'un même élément de silicium. Dans ce cas, le positionnement du guide de couplage 51, c'est-à-dire en fait de la gravure préférentielle, par rapport au guide interne au composant est relativement aisée puisque ce positionnement est obtenu par construction. Il ne reste plus alors, en pratique, que de positionner le coeur de la fibre en regard de l'entrée du guide de couplage 51, ce qui est d'autant plus facile que ce dernier comporte une section du même ordre de grandeur que le coeur, voire supérieur.

La figure 6 présente un autre mode de réalisation possible d'un dispositif de couplage selon l'invention. Ce mode de réalisation diffère du précédent par le fait que le guide d'onde optique 61 du dispositif de couplage, toujours en forme d'entonnoir à trois dimensions, se termine par une section, ou profondeur, sensiblement nulle. Le coeur 4 de la fibre optique est toujours placé en regard de la grande section du guide de couplage 61, mais le composant optoélectronique est situé au-dessus de ce guide, plus particulièrement au-dessus de sa terminaison 62. L'onde optique guidée se propage alors dans le composant optoélectronique par évanescence par l'ouverture supérieure du guide 61, celle qui est au contact du composant optoélectronique.

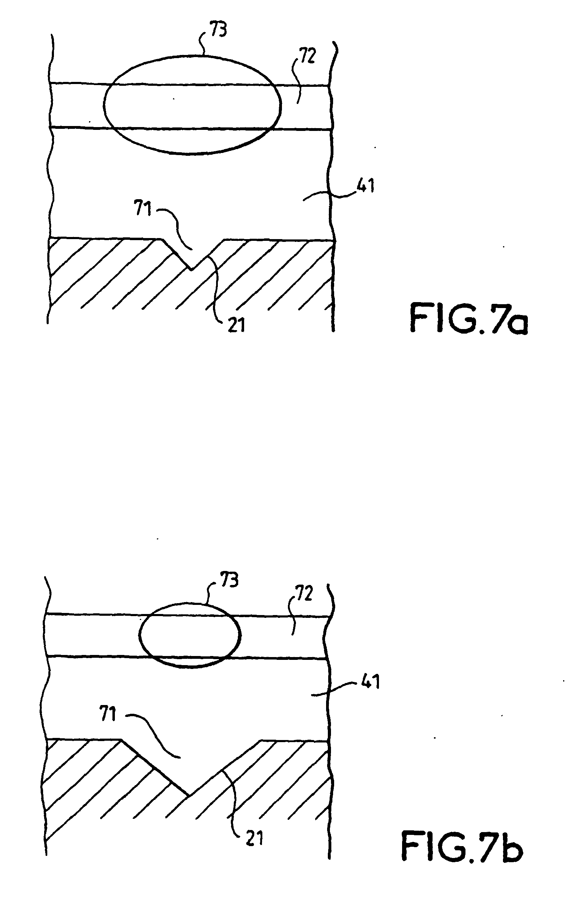

Les figures 7a et 7b illustrent, par une vue en coupe, un autre exemple de réalisation d'un dispositif de couplage selon l'invention. Plus particulièrement, ce dispositif comporte un guide obtenu par gravure selon l'invention qui effectue un guidage indirect du flux lumineux entre les deux composants à coupler. Dans les exemples de réalisation précédents, l'onde optique est directement guidée dans l'espace défini par l'intérieur de la gravure 21. Dans les figures 7a et 7b, la lumière 73 n'est pas guidée à l'intérieur de la gravure ou de l'espace 71 défini par celle-ci mais dans un guide optique à ruban 72 appelé encore « rib waveguide » dans la littérature anglo-saxonne. Dans ce mode de réalisation, on retrouve la structure précédente pour laquelle le guide optique 72, c'est-à-dire le matériau de coeur, est une couche déposée au-dessus du matériau de remplissage 41 de la gravure. Dans ce cas, le matériau de remplissage 41 déborde par exemple de la gravure. La partie de matériau située à l'intérieur de la gravure joue alors un rôle de puits de potentiel qu'illustre notamment l'évolution de la section de lumière guidée entre la figure 7a et la figure 7b. Comme dans les modes de réalisation précédents, la rainure présente une forme d'entonnoir à trois dimensions. Entre la figure 7a et la figure 7b, la profondeur du guide indirect 71 a évolué, la profondeur étant plus importante dans la figure 7b. Ces deux figures montrent que plus la profondeur de la gravure, ou du guide indirect, est importante plus la section de lumière 73 guidée rétrécit. La fonction d'entonnoir du flux lumineux guidée est alors assurée. Comme pour les modes de réalisation précédents, le matériau de remplissage peut être démoulé, après durcissement.

Avantageusement, l'invention peut s'appliquer dans de nombreux domaines. Elle peut ainsi s'appliquer dans le domaine des télécommunications numériques à haut débit par voie optique, pour le routage informatique, pour les systèmes hyperfréquence reconfigurables, pour la synthèse de retards et la formation de faisceaux dans les antennes à balayage électronique, pour les interconnexions optiques de processeurs numériques ou encore pour les interconnexions de calculateurs. Plus généralement, l'invention s'applique dans les systèmes où il faut coupler des composants optiques, notamment des fibres optiques, avec des composants électroniques.

Par extension, le procédé selon l'invention pourrait s'appliquer à la réalisation de guides qui ne sont pas destinés à véhiculer des flux lumineux, mais par exemple des flux de matière. L'invention pourrait ainsi s'appliquer pour la réalisation de guides de fluides dans des microsystèmes, où il est nécessaire notamment de maîtriser la largeur mais aussi la profondeur des guides. Dans ce cas, les fluides sont canalisés par la gravure 21.

**Revendications**

1.  Procédé de réalisation d'un guide d'onde optique, **caractérisé en ce qu'**il comporte :

    -   une étape de gravure (21) dans un substrat (22) à structure cristalline, la gravure étant effectuée suivant une direction privilégiée de la structure cristalline de sorte que la profondeur de la gravure varie avec la largeur de la gravure,
    -   une étape de remplissage de la gravure ainsi formée par un matériau d'indice de réfraction supérieur à l'indice de réfraction du substrat (22).

2.  Procédé selon la revendication 1, **caractérisé en ce que** la largeur de la gravure varie pour former un entonnoir à trois dimensions.

3.  Procédé selon l'une quelconque des revendications 1 ou 2, **caractérisé en ce que** le matériau de remplissage (41) est un polymère.

4.  Procédé selon l'une quelconque des revendications 1 ou 2, **caractérisé en ce que** le matériau de remplissage (41) est une silice.

5.  Procédé selon l'une quelconque des revendications précédentes, **caractérisé en ce qu'**une couche d'isolant optique (44) est déposée sur la surface intérieure de la gravure (21).

6.  Procédé selon la revendication 5, **caractérisé en ce que** la couche (44) est une couche métallique.

**7.** Procédé selon la revendication 5, **caractérisé en ce que** la couche (44) est une couche d'oxyde de silicium.

**8.** Procédé selon la revendication 5, **caractérisé en ce que** la couche (44) est une couche de nitrure de silicium.

**9.** Procédé selon l'une quelconque des revendications précédentes, **caractérisé en ce qu'**après durcissement, le matériau de remplissage (41) est démoulé de la gravure (21).

**10.** Dispositif de couplage optique entre deux composants (1, 2), **caractérisé en ce qu'**il comporte un guide d'onde optique entre les deux composants, le guide d'onde optique étant obtenu selon l'une quelconque des revendications précédentes.

**11.** Dispositif selon la revendication 10, **caractérisé en ce que** le guide (51) ayant la forme d'un entonnoir à trois dimensions, sa section décroît jusqu'à une section non nulle.

**12.** Dispositif selon la revendication 11, **caractérisé en ce qu'**une plage est creusée dans le substrat (22) pour accueillir un composant optoélectronique (2), le guide d'onde optique de ce dernier coïncidant avec le guide (51) du dispositif.

**13.** Dispositif selon la revendication 12 **caractérisé en ce que** le composant optoélectronique (2) est réalisé dans le même élément cristallin que le substrat (22).

**14.** Dispositif selon la revendication 12, **caractérisé en ce que** le guide (61) ayant la forme d'un entonnoir à trois dimensions, sa section décroît jusqu'à une section nulle.

**15.** Dispositif selon la revendication 10, **caractérisé en ce qu'**il comporte un guide optique à ruban (72) déposé sur un matériau (41) de remplissage de la gravure (21), l'onde optique transitant à l'intérieur de ce guide à ruban (72).

**16.** Dispositif selon l'une quelconque des revendications 10 à 15, **caractérisé en ce que** le substrat (22) est en silicium.

**17.** Dispositif selon l'une quelconque des revendications 10 à 15, **caractérisé en ce que** le substrat (22) est en arséniure de gallium.

**18.** Dispositif selon l'une quelconque des revendications 10 à 15, **caractérisé en ce que** le substrat (22) est en phosphure d'indium.

**Patentansprüche**

**1.** Verfahren zum Herstellen eines optischen Wellenleiters, **dadurch gekennzeichnet, dass** er Folgendes umfasst:

- einen Schritt des Gravierens (21) in einer Unterlage (22) mit kristalliner Struktur, wobei die Gravur gemäß einer bevorzugten Richtung der kristallinen Struktur durchgeführt wird, so dass die Gravurtiefe mit der Gravurbreite variiert,
- einen Schritt des Füllens der so ausgebildeten Gravur mit einem Werkstoff mit einem Brechungsindex größer als der Brechungsindex der Unterlage (22).

**2.** Verfahren nach Anspruch 1, **dadurch gekennzeichnet, dass** die Gravurbreite variiert, um einen dreidimensionalen Trichter zu bilden.

**3.** Verfahren nach einem der Ansprüche 1 oder 2, **dadurch gekennzeichnet, dass** das Füllmaterial (41) ein Polymer ist.

**4.** Verfahren nach einem der Ansprüche 1 oder 2, **dadurch gekennzeichnet, dass** das Füllmaterial (41) ein Siliziumdioxid ist.

**5.** Verfahren nach einem der vorhergehenden Ansprüche, **dadurch gekennzeichnet, dass** eine Schicht optischen Isoliermittels (44) auf der Innenfläche der Gravur (21) aufgebracht wird.

**6.** Verfahren nach Anspruch 5, **dadurch gekennzeichnet, dass** die Schicht (44) eine Metallschicht ist.

**7.** Verfahren nach Anspruch 5, **dadurch gekennzeichnet, dass** die Schicht (44) eine Siliziumoxidschicht ist.

**8.** Verfahren nach Anspruch 5, **dadurch gekennzeichnet, dass** die Schicht (44) eine Siliziumnitridschicht ist.

**9.** Verfahren nach einem der vorhergehenden Ansprüche, **dadurch gekennzeichnet, dass** der Füllwerkstoff (41) nach dem Aushärten aus der Gravur (21) abgeformt wird.

**10.** Vorrichtung zum optischen Koppeln zwischen zwei Bauteilen (1, 2), **dadurch gekennzeichnet, dass** sie einen optischen Wellenleiter zwischen den zwei Bauteilen umfasst, wobei der optische Wellenleiter gemäß einem der vorhergehenden Ansprüche erzielt wird.

**11.** Vorrichtung nach Anspruch 10, **dadurch gekenn-**

**zeichnet, dass** der Wellenleiter (51) die Form eines dreidimensionalen Trichters hat, dessen Querschnitt bis zu einem Querschnitt nicht gleich Null sinkt.

12. Vorrichtung nach Anspruch 11, **dadurch gekennzeichnet, dass** ein Bereich in die Unterlage (22) gehöhlt wird, um einen optoelektronischen Bauteil (2) aufzunehmen, wobei der optische Wellenleiter dieses Letzteren mit dem optischen Wellenleiter (51) der Vorrichtung zusammenfällt.

13. Vorrichtung nach Anspruch 12, **dadurch gekennzeichnet, dass** der optoelektronische Bauteil (2) aus dem gleichen kristallinen Element wie die Unterlage (22) hergestellt ist.

14. Vorrichtung nach Anspruch 12, **dadurch gekennzeichnet, dass** der optische Wellenleiter (61) die Form eines dreidimensionalen Trichters hat, dessen Querschnitt bis zu einem Querschnitt gleich Null sinkt.

15. Vorrichtung nach Anspruch 10, **dadurch gekennzeichnet, dass** sie einen optischen Wellenleiter mit Halbleiterband (72) umfasst, der auf einem Füllwerkstoff (41) der Gravur (21) aufgebracht ist, wobei die optische Welle im Inneren dieses optischen Wellenleiters mit Halbleiterband (72) durchgeht.

16. Vorrichtung nach einem der Ansprüche 10 bis 15, **dadurch gekennzeichnet, dass** die Unterlage (22) aus Silizium besteht.

17. Vorrichtung nach einem der Ansprüche 10 bis 15, **dadurch gekennzeichnet, dass** die Unterlage (22) aus Galliumarsenid besteht.

18. Vorrichtung nach einem der Ansprüche 10 bis 15, **dadurch gekennzeichnet, dass** die Unterlage (22) aus Indiumphosphid besteht.

**Claims**

1. Process for fabricating an optical waveguide, **characterized in that** it comprises:

   - a step of etching (21) into a substrate (22) of crystalline structure, the etching being carried out in a preferential direction of the crystalline structure in such a way that the depth of the etching varies with the width of the etching; and
   - a step of filling the etched feature thus formed with a material having a refractive index higher than the refractive index of the substrate (22).

2. Process according to Claim 1, **characterized in that** the width of the etched feature varies in order to form a funnel in three dimensions.

3. Process according to either of Claims 1 and 2, **characterized in that** the fill material (41) is a polymer.

4. Process according to either of Claims 1 and 2, **characterized in that** the fill material (41) is a silica.

5. Process according to any one of the preceding claims, **characterized in that** an optical isolation layer (44) is deposited on the inner surface of the etched feature (21).

6. Process according to Claim 5, **characterized in that** the layer (44) is a metal layer.

7. Process according to Claim 5, **characterized in that** the layer (44) is a silicon oxide layer.

8. Process according to Claim 5, **characterized in that** the layer (44) is a silicon nitride layer.

9. Process according to any one of the preceding claims, **characterized in that**, after curing or setting, the fill material (41) is demoulded from the etched feature (21).

10. Optical coupling device for coupling between two components (1, 2), **characterized in that** it comprises an optical waveguide between the two components, the optical waveguide being obtained according to any one of the preceding claims.

11. Device according to Claim 10, **characterized in that** the cross section of the waveguide (51), which has the shape of a funnel in three dimensions, decreases down to a none-zero cross section.

12. Device according to Claim 11, **characterized in that** an area is hollowed in the substrate (22) in order to house an optoelectronic component (2), the optical waveguide of the latter coinciding with the waveguide (51) of the device.

13. Device according to Claim 12, **characterized in that** the optoelectronic component (2) is produced in the same crystalline element as the substrate (22).

14. Device according to Claim 12, **characterized in that** the cross section of the waveguide (61), which has the shape of a funnel in three dimensions, decreases down to a zero cross section.

15. Device according to Claim 10, **characterized in that** it comprises a rib optical waveguide (72) deposited on a fill material (41) that fills the etched feature (21), the optical waveguide propagating inside this rib waveguide (72).

16. Device according to any one of Claims 10 to 15, **characterized in that** the substrate (22) is made of silicon.

17. Device according to any one of Claims 10 to 15, **characterized in that** the substrate (22) is made of gallium arsenide.

18. Device according to any one of Claims 10 to 15, **characterized in that** the substrate (22) is made of indium phosphide.

FIG.1

FIG.2

FIG.3a

FIG.3b

FIG.3c

FIG.4

FIG.5

FIG.6

FIG.7a

FIG.7b